# EUROPEAN PATENT APPLICATION

(11) **EP 1 225 006 A1**
(43) Date of publication of application: **24.07.2002**
(21) Application number: 01130126.4
(22) Date of filing: 18.12.2001
(51) Int. Cl.: B24B 9/10, B65G 17/32, B65G 47/91

(54) **Conveyor for feeding sheets of glass on a grinding machine**

(30) Priority: 19.12.2000 IT TO001179
(71) Applicant: BOTTERO S.p.A., 12010 Roata Canale (Cuneo) (IT)
(72) Inventor: Margaria, Pierfranco, 10094 Valgioie (IT)
(74) Representative: Jorio, Paolo

(57) **Abstract**

On a machine (1) for grinding sheets of glass, a sheet (2; 3) of glass for grinding is fed to a grinding head (6) by one or more slat conveyors (9), each of which has a supporting structure (10), and a number of powered pads (11; 35) having respective surfaces (26) for supporting the sheet (2; 3) of glass; each pad (11; 35) having a respective vacuum retaining device (27) movable between a retaining condition and a release condition respectively retaining and releasing the sheet (2; 3) of glass.

## Description

The present invention relates to a slat conveyor for feeding a sheet of glass on a grinding machine.

The present invention may be used to advantage particularly, though not exclusively, on two-sided machines, to which the following description refers purely by way of example.

As is known, a two-sided machine comprises one or more grinding heads; and a feed unit for retaining the work sheet in a reference position and feeding the sheet between the grinding heads.

Known feed units normally comprise one or more pairs of facing belt conveyors; and the conveyors in each pair comprise respective endless belts, normally made of elastomeric material and having respective facing feed branches which are forced, in use, against each other to grip the sheet to be retained and fed forward.

Though widely used, known feed units of the type described above are unsatisfactory, mainly on account of the fact that they cannot be used for all types of sheets, and in particular for coated sheets of glass, i.e. sheets having an extensive surface coated with a layer of coating material. As is known, in most cases, the coating is extremely fragile, so that any contact with it when handling or machining the sheet must be avoided at all costs, which is impossible on known machines of the type described, on which the coating would be damaged by inevitable contact with one of the feed belts.

It is an object of the present invention to provide a sheet-feed slat conveyor designed to provide a straightforward, low-cost solution to the above problem, and which at the same time provides for obtaining sheets of glass having the same geometric, dimensional and surface finish characteristics as sheets workable on known machines.

According to the present invention, there is provided a slat conveyor for feeding a sheet of glass on a machine for grinding sheets of glass, the conveyor comprising a supporting structure; a number of pads, each having a supporting surface for supporting the sheet of glass; and feed means for advancing said pads; and being characterized in that each said pad comprises retaining means for keeping the sheet of glass in contact with the relative said supporting surface; control means being provided to move said retaining means between a retaining condition and a release condition respectively retaining and releasing said sheet of glass.

A non-limiting embodiment of the invention will be described by way of example with reference to the accompanying drawings, in which:
Figure 1 shows, schematically and substantially in block form, a machine for grinding sheets of glass and featuring a slat conveyor in accordance with the teachings of the present invention;
Figures 2 and 3 show larger-scale sections of a detail of Figure 1 in two different operating positions;
Figure 4 shows a much larger-scale section of a variation of a detail in Figures 2 and 3;
Figures 5 and 6 are similar to, and show a variation of a detail in, Figures 2 and 3 respectively;
Figure 7 shows a further variation of a detail in Figure 6.

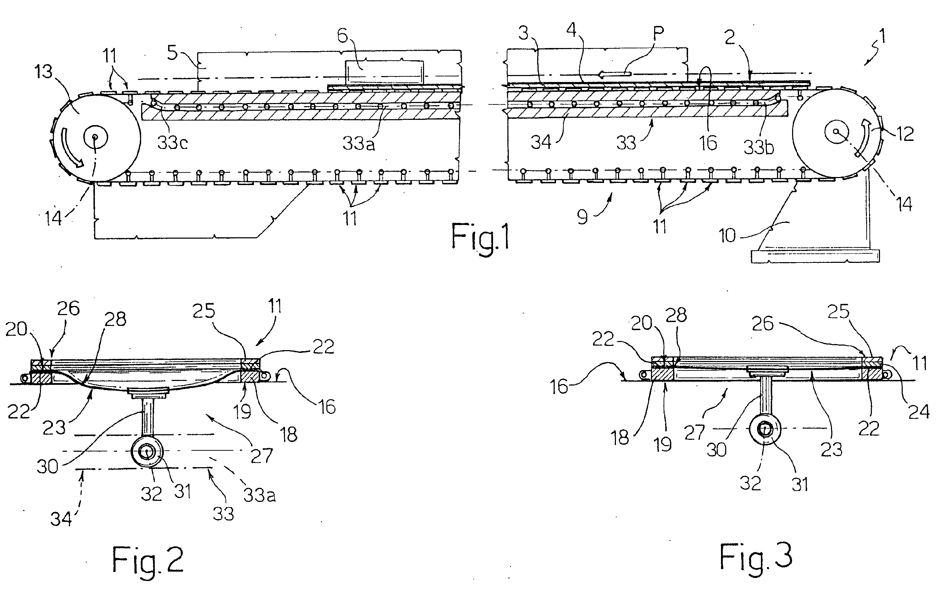

Number 1 in Figure 1 indicates as a whole a grinding machine, which may be used for grinding both ordinary sheets of glass and coated sheets of glass 2, wherein the extensive surface of an ordinary sheet 3 of glass is coated with a layer 4 of coating material selectable from a number of coating materials.

Machine 1 comprises two lateral shoulders 5, only one of which is shown partly in Figure 1; and, for each shoulder 5, a respective known grinding unit 6 for grinding a peripheral portion of coated sheet of glass 2, and a respective slat conveyor 9 for feeding sheet 2 through respective unit 6. Each slat conveyor 9 is adjacent to respective shoulder 5, and comprises a supporting structure 10, and a number of pads 11 for supporting and retaining the coated sheet 2 to be fed forward. More specifically, pads 11 of each conveyor 9 are arranged side by side and connected to one another (Figure 1) to define a catenary looped about two rollers 12 and 13 rotating about respective parallel axes 14 and powered to move relative pads 11 along a sheet-grinding path P and in contact with a guide track 16 formed on supporting structure 10 between rollers 12 and 13.

As shown, particularly in Figures 2 to 4, each pad 11 is hollow with its concavity facing coated sheet 2 to be fed forward, and comprises a rigid, annular supporting body 18 defined by two flat, parallel, opposite surfaces 19 and 20. In use, surface 19 slides on track 16, while surface 20 defines a support for a peripheral portion 22 of an elastically flexible membrane 23 extending inside annular body 18. Peripheral portion 22 of membrane 23 is forced against surface 20, and is retained contacting surface 20 by a further annular clamping body 24, which is superimposed on and connected integrally to supporting body 18, and supports an outer annular disk 25 of elastomeric material cured or otherwise connected integrally to body 24 and defining a flat annular surface 26 for supporting coated sheet 2.

Body 24, membrane 23 and disk 25 form part of a vacuum retaining device 27, and define a variable-volume cavity 28, the bottom wall of which is defined by membrane 23. An intermediate portion of membrane 23 is connected integrally to a control member 30 for controlling membrane 23, and which extends through supporting body 18, projects outwards of body 18 perpendicularly to axes 14, and terminates with a tappet member defined, in the example shown, by two wheels 31 rotating about a common axis 32 parallel to axes 14. Wheels 31 and relative control member 30 form part of a mechanical device 33 for flexing membrane 23, and which also comprises a guide or cam 34 fitted integrally to structure 10, between rollers 12 and 13 and along track 16, and defining a rolling track for wheels 31. More specifically, guide 34 comprises a straight, intermediate portion 33a parallel to and spaced transversely apart from track 16; a contoured input portion 33b; and a contoured output portion 33c.

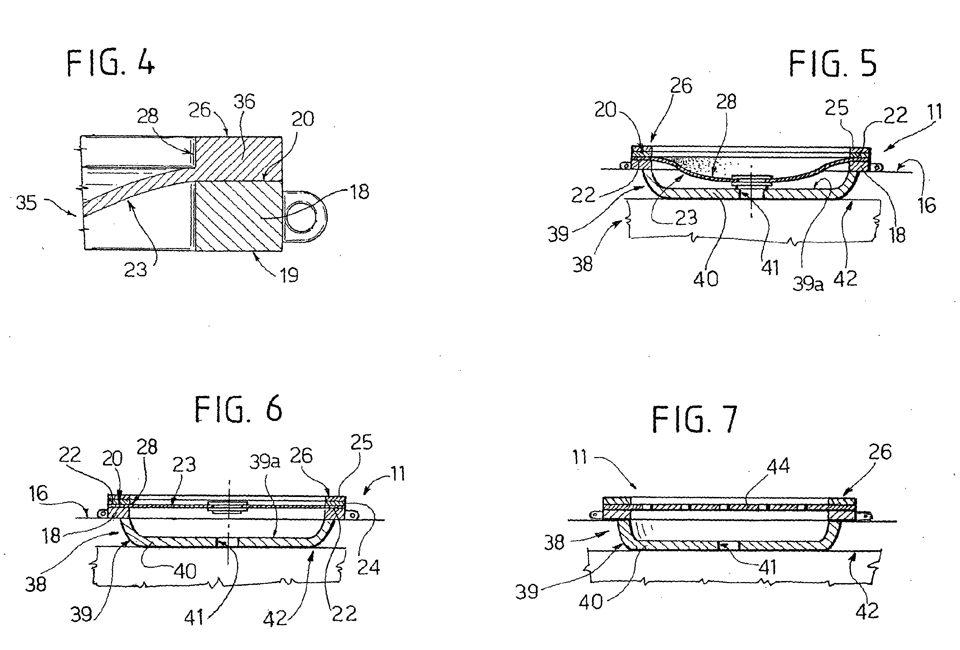

The Figure 4 variation shows a pad 35 which differs from pad 11 solely by annular body 24, disk 25 and membrane 23 forming part of a single block 36 of elastomeric material connected integrally, e.g. glued or riveted, to body 18.

In actual use, and with reference to one pad 11, 35 for the sake of simplicity, coated sheet 2 is fed to conveyor 9 with layer 4 of coating material facing upwards (Figure 1), and an end portion of sheet 2 is rested on surface 26 of the pad adjacent to roller 12. At this point, conveyor 9 is activated, and pad 11 is fed along path P. That is, pad 11 first travels along an initial portion of path P in the rest condition shown in Figure 3, seeing as guide 34 is not yet engaged by wheels 31, so that membrane 23 remains undeformed and sheet 2 as yet simply rests on surface 26. As soon as wheels 31 start to run along portion 33b, membrane 23 is gradually flexed downwards to attract the portion of sheet 2 facing cavity 28 by forming a vacuum inside cavity 28, which forces sheet 2 against supporting surface 26 of the pad to secure sheet 2 in a fixed position with respect to pad 11, 35. This action, which reaches its maximum force by the time wheels 31 run along the end of portion 33b, remains more or less constant throughout the travel of wheels 31 along portion 33a, i.e. throughout the time the edges of sheet 2 are being ground; after which, the force of attraction is gradually reduced as wheels 31 run along output portion 33c, and is eliminated entirely as wheels 31 disengage guide 34. At this point, the ground coated sheet 2 can be removed off conveyor 9.

In the Figure 5 and 6 variation, as opposed to a cam control device, membrane 23 is activated by a vacuum flexing device 38 comprising, in place of annular body 18 and device 33, a cup-shaped body 39, which is closed at the top by membrane 23 to define a chamber 39a, and comprises a bottom wall 40 having one or more openings 41 connecting chamber 39a to a vacuum chamber or conduit 42 extending in place of cam 34.

Pad 11 in the Figure 7 variation differs from pad 11 in Figures 5 and 6 by membrane 23 simply being replaced with a perforated wall 44.

In actual use, when pads 11 in Figures 5 and 6 are positioned over chamber 42, a vacuum is formed beneath each membrane 23 to flex the membrane 23 downwards and secure the sheet to respective surface 26. Without membrane 23, as in the Figure 7 case, the sheet is retained by suction through perforated wall 44.

Conveyors 9 described therefore provide for feeding any type of sheet, and in particular coated sheets of glass, through one or more grinding units, without the retaining action for retaining the sheet on the conveyor affecting the surface of the sheet opposite the one resting on the conveyor, i.e. the coated surface. This is mainly due to the particular configuration of pads 11, 35, which, by each exerting retaining action independently of the other pads and on the surface of the sheet resting on the pads, provide, with respect to known solutions, for eliminating normally used pressure belts which would interfere with the layer of coating material.

The straightforward design of pads 11, 35 - and in particular by providing controlled-vacuum pads - makes conveyor 9 extremely cheap to produce and maintain, highly compact, and at the same time highly efficient and reliable.

Clearly, changes may be made to conveyor 9 as described herein without, however, departing from the scope of the present invention. More specifically, pads 11, 35 may be formed otherwise than as described by way of example, and, in particular, may comprise a number of membranes deformable simultaneously or at different times, or multilayer membranes deformable by devices other than the cam device described; and each pad may be provided with a vacuum device other than those described.

Conveyor 9 described may, obviously, also be employed on machines other than the one described by way of example, and in particular on vertical grinding machines on which the sheets of glass are fed substantially on edge.

## Claims

1. A slat conveyor (9) for feeding a sheet of glass (2; 3) on a machine (1) for grinding sheets of glass (2; 3), the conveyor comprising a supporting structure (10); a number of pads (11; 35), each having a supporting surface (26) for supporting the sheet of glass (2; 3); and feed means (12, 13) for advancing said pads (11; 35); and being **characterized in that** each said pad (11; 35) comprises retaining means (27; 38) which act on the surface of the sheet of glass (2; 3) facing said supporting surface (26) to keep the sheet of glass (2; 3) in contact with the relative said supporting surface (26).

2. A conveyor as claimed in Claim 1, **characterized in that** said retaining means (27; 38) of each said pad (11; 35) are independent of the retaining means (27; 38) of the other pads (11; 35).

3. A conveyor as claimed in Claim 1 or 2, **characterized in that** said retaining means (27; 38) are housed at least partly in the relative said pad (11; 35).

4. A conveyor as claimed in any one of the foregoing Claims, **characterized in that** said supporting surface (26) forms part of said retaining means (27; 38).

5. A conveyor as claimed in any one of the foregoing Claims, **characterized in that** said retaining means (27) comprise vacuum retaining means (23, 26; 38) for each said pad (11; 35).

6. A conveyor as claimed in Claim 5, **characterized in that** said vacuum retaining means (38) comprise a chamber (39a) connectable to a vacuum environment.

7. A conveyor as claimed in Claim 6, **characterized in that** said chamber (39a) is defined, on the side facing, in use, said sheet of glass, by an elastically deformable wall (23).

8. A conveyor as claimed in Claim 6, **characterized in that** said chamber (39a) is defined, on the side facing, in use, said sheet of glass, by a perforated wall (44).

9. A conveyor as claimed in any one of the foregoing Claims, **characterized in that** the retaining means (27; 38) of each said pad (11; 35) comprise a cavity (28) open on the side facing said sheet of glass (2; 3) and surrounded by said supporting surface (26); said cavity (28) being defined by an at least partly elastically deformable lateral wall (23); and mechanical control means (33) being provided to move said lateral wall (23) between a substantially undeformed rest condition and a deformed work condition in which said sheet of glass (2; 3) is forced against said supporting surface (26).

10. A conveyor as claimed in Claim 9, **characterized in that** said mechanical control means (33) comprise, for each said pad (11; 35), a respective control member (30) acting on the elastically deformable said lateral wall (23); and actuating means (31, 34) for activating the control member (30).

11. A conveyor as claimed in Claim 10, **characterized in that** said actuating means (31, 34) comprise cam means (34); and, for each said control member (30), a tappet member (31) cooperating, in use, with said cam means (34) to deform said lateral wall (23).

12. A conveyor as claimed in Claim 11, **characterized in that** said cam means (34) are carried by said supporting structure.

13. A conveyor as claimed in Claim 10 or 11, **characterized by** comprising a slide surface (16) for said pads (11; 35); and in that said cam means comprise a guide (34), a straight portion (33a) of which extends parallel to and is spaced transversely apart from said slide surface (16), and is engaged, in use, in rolling manner by said tappet members (31).

14. A conveyor as claimed in any one of Claims 7 to 13, **characterized in that** each said pad (35) comprises a block (36) of elastomeric material formed in one piece and defined by said supporting surface (26); said lateral wall (23) forming part of said block (36) of elastomeric material.

15. A conveyor as claimed in any one of Claims 7 to 13, **characterized in that** each said pad (11; 35) comprises a supporting body (18); an annular body (25) over the supporting body (18), defined by said supporting surface (26), and connected integrally to said supporting body (18); and an elastically deformable membrane (23) interposed between said supporting body (18) and said annular body (25), and having a peripheral portion (22) gripped between said supporting body (18) and said annular body (25); the rest of said membrane (23) defining said lateral wall.

16. A machine (1) for machining sheets (2; 3) of glass; the machine (1) comprising at least one grinding head (6); and conveying means (9) for feeding a said sheet (2; 3) of glass along a grinding path (P) ; **characterized in that** said conveying means comprise at least one slat conveyor (9) as claimed in any one of the foregoing Claims.
